# EUROPEAN PATENT SPECIFICATION

(11) **EP 0 539 168 B1**
(45) Date of publication and mention of the grant of the patent: **17.12.1997**
(21) Application number: 92309584.8
(22) Date of filing: 20.10.1992
(51) Int. Cl.: G01N 33/48, G01N 33/487, G01N 35/00

(54) **Analyzer having a cover and an adjustable display or controller**
Analysevorrichtung mit Deckel und einstellbarem Wiedergabefenster oder Bewachungseinrichtung
Appareil d'analyse ayant un couvercle et un affichage ou système de contrôle ajustable

(30) Priority: 22.10.1991 JP 94478/91
(43) Date of publication of application: 28.04.1993
(73) Proprietor: TOA MEDICAL ELECTRONICS CO., LTD., Chuoku, Kobe (JP)
(72) Inventor: Furuie, Dai, Kakogawashi, Hyogoken (JP)
(74) Representative: Price, Paul Anthony King

(56) References cited:
- EP-A- 0 187 699
- WO-A-85/02257
- US-A- 3 906 890
- US-A- 4 839 837

## Description

The present invention relates to an analyzer (e.g. for aspirating and analyzing blood or urine), and more particularly to an analyzer having a cover with an adjustable display and/or controller.

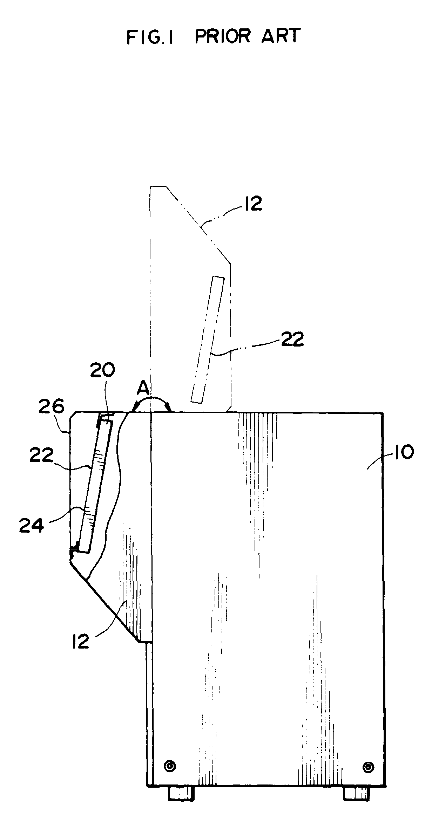

In an apparatus for aspirating and analyzing specimens such as blood, it is known to provide an opening cover. Fig. 1 is a partially cut-away side view of such conventional apparatus. Numeral 10 denotes the main body of an automatic analyzer, and 12 is a front cover. The front cover 12 can be opened and closed in the direction of arrow A. The double dot chain line indicates the opened state of the front cover 12. Usually, the apparatus is used with the front cover 12 lowered, that is, with the front cover 12 in the closed state.

When adjusting the sensitivity or in the event of maintenance or the like, the front cover 12 is opened, and the work is done, that is, the units built in the main body of the apparatus are adjusted, and the control knobs (volume control knob etc.) of the printed circuit board (electric circuit) are regulated.

Numeral 20 denotes a control and display unit for displaying the results of measurement and setting various conditions, and it is provided inside the front cover 12. It is designed to permit use of operation keys 24 or reading of display screen 22 from outside the analyzer.

In the procedure of such adjustment or the like, while actually measuring, it is sometimes necessary to operate by observing measurement results on the display screen 22. Furthermore, on the basis of the displayed result, data must be entered by using the operation keys 24. Numeral 26 is an opening made in the front cover 12.

In the conventional apparatus, with the front cover 12 opened, it is not possible to enter the data by using the operation keys 24 or to read the display screen 22 from the front side. Accordingly, on every occasion of adjustment or maintenance, the front cover must be opened and closed, which is very troublesome.

According to a first aspect of the present invention, there is provided an analyzer comprising: a main body; a front cover pivotably connected to the main body so as to be pivotable around a first axis of rotational movement from a closed position to an open position; and a control and/or display part connected to the front cover and having operation keys which may be used and/or a display which may be viewed, when the front cover is in its closed position; characterized in that: the control and/or display part is pivotably connected to the front cover so as to be pivotable around a second axis of rotational movement so that the operation keys may be used and/or the display may be viewed, when the front cover is in its open position; and the second axis is substantially parallel to the first axis.

By rotating the control and/or display part with the front cover opened, the control and/or display part is made to face forwards, so that the operation keys may be used and/or the display may be viewed from the front side. Usually, the front cover is closed.

Preferably, the control and/or display part is pivotably connected to the front cover by a shaft disposed adjacent to an edge of the control and/or display part.

Usually, when the front cover is in its closed position, the control and/or display part is inside the front cover and the operation keys may be used and/or the display may be viewed through an opening in the front cover.

The invention will now be described by way of non-limiting embodiments with reference to the accompanying drawings, in which:-
Fig. 1 is a side view showing an example of a conventional analyzer having a cover;
Fig. 2 is a partially cut-away perspective view showing an embodiment of an analyzer having a cover in accordance with the invention;
Fig. 3 is a partially cut-away side view of the apparatus shown in Fig. 2, showing the front cover in the opened state;
Fig. 4 is a partially cut-away side view of the apparatus shown in Fig. 2, showing the front cover in the closed state; and
Fig. 5 is a front view of a specimen aspiration tube of the front cover.

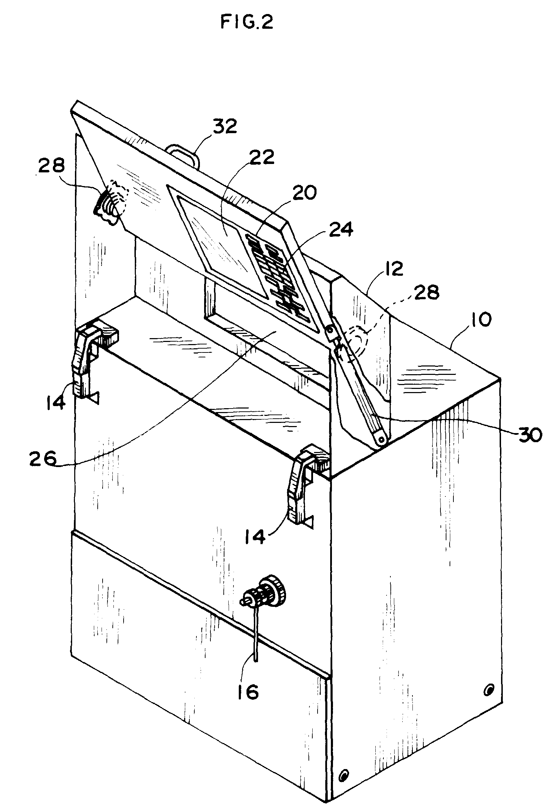

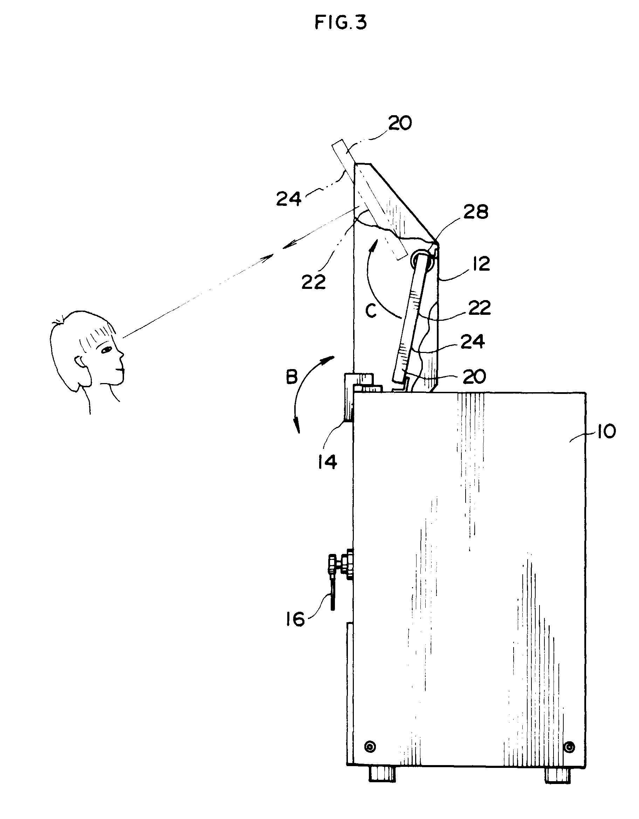

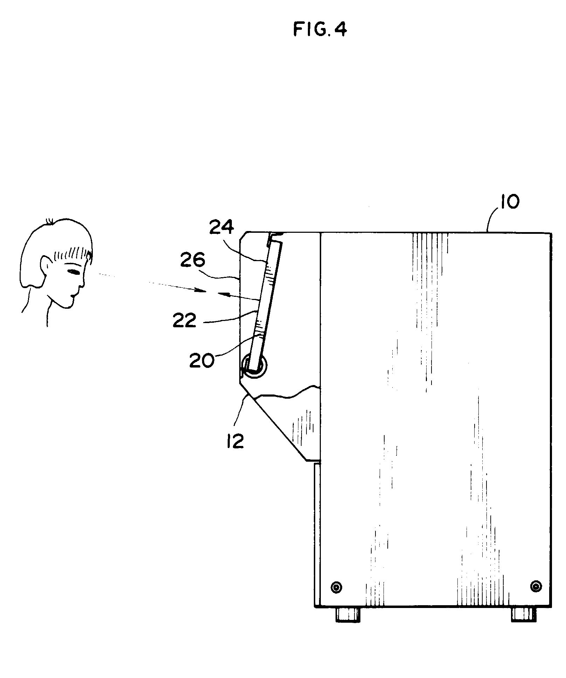

Referring to the embodiment of Figs. 2 and 3, the automatic blood analyzer comprises a main body 10, and a front cover 12 that can be opened and closed. Mounting brackets 14 couple together the main body 10 and front cover 12, so that the front cover 12 may be pivoted up and down in the direction of arrow B to open or close it. Fig. 4 shows the closed state of the front cover achieved by rotating the front cover downwards.

On the front side of the main body 10, an aspiration tube 16 for aspirating the specimen is provided. Numeral 20 is a control and display part, comprising operation keys 24 for entering or setting data, and display screen 22 for displaying the results of measurement and other information.

This control and display part 20 is rotatably mounted inside the front cover 12. An opening 26 is formed in the front surface of the front cover 12, so that the operation keys 24 may be used and the display screen 22 may be observed, from outside the apparatus. Besides, as shown in Fig. 3, after the front cover has been opened, the control and display part 20 may be pivoted about its top edge relative to the front cover 12 by means of a shaft 28, e.g. a TOK Bearing (trade name) or the like. Slightly below where the shaft 28 is connected to the control and display part 20, one end of a shock absorber such as gas spring 30 is rotatably connected to the control and display part. The other end of the gas spring 30 is connected to the front cover 12. Numeral 32 is a handle of the control and display part 20 (Fig. 2).

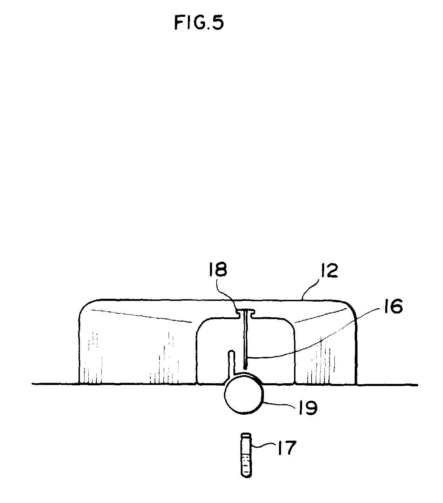

Fig. 5 is a front view of the specimen aspiration tube 16 of the front cover 12. Numeral 18 is a notch, which allows the aspiration tube 16 to extend out of the cover from below, even when the front cover 12 is closed. Numeral 17 is a specimen container containing a blood sample and 19 is a container (e.g. waste cup) for cleaning the specimen aspiration tube 16.

Usually, as shown in Fig. 4, the front cover 12 is lowered, and the apparatus is used in the cover closed state. At this time, the operation keys 24 and display screen 22 of the control and display part 20 face forwards (towards the left in Fig. 4), and therefore the operation keys 24 may be used and the display screen 22 may be observed from outside the apparatus through the opening 26.

When making sensitivity adjustments or the like, as shown in Fig. 3, the front cover 12 is rotated and lifted, and the units built in the main body of the apparatus and the volume control knob of the printed circuit board are adjusted from the front side of the apparatus. With the front cover 12 opened, the operation keys 24 and display screen 22 face backwards (towards the right in Fig. 3), and are positioned upside down.

Accordingly, as indicated by double dot chain line, by rotating the control and display part 20 in the direction of arrow C around the shaft 28, the vertical direction of the operation keys 24 and display panel 22 is inverted, and the operation keys 24 and display screen 22 face forwards, obliquely in the downward direction, so that it is easy for an operator standing in front of the apparatus to use the operation keys 24 and to observe the display panel 22. Usually, the control and display part 20 is rigidly fixed to the front cover 12. The fixing means (not shown) may be a known one. When it is necessary to rotate the control and display part 20, its fixing is released, and the control and display part 20 is rotated by using the handle 32.

As the means for supporting the other end of the control and display part 20, it is preferable to use the gas spring 30 as mentioned above. However, the gas spring 30 may be replaced by any substitute which produces a force acting in the direction of extension. Initially, the gas spring 30 is slightly extended. To rotate the control and display part 20, the gas spring 30 is compressed. When it has been rotated to a certain extent, the gas spring 30 starts to extend, and by this extension force the control and display part 20 may be easily rotated. Thus, the gas spring 30 assists the rotation. The control and display part 20 stops rotating when the gas spring 30 has fully extended. The fixing means (not shown) may be used to fix the control and display part 20 in its new position.

As the shaft 28, it is desired to use one having a load in the rotating direction. This is because the rotary motion of the control and display part 20 becomes slower and smoother. Such rotary shaft is available from TOK Bearing Co. with the trade name of TOK Bearing.

When opening and closing the front cover 12 up and down, it is preferred to connect the shaft 28 to the lower part of the control and display part 20. This is because, as mentioned above, the operation keys 24 and display screen 22 are directed forwards and obliquely downwards as shown in Fig. 2. However, it may be connected to the upper part of the control and display part 20. If so, the operation keys 24 and display screen 22 would be directed forwards and obliquely upwards.

So far, the front cover 12 has been described as rotating about a horizontal axis. However, the cover 12 may be opened and closed laterally. For the same reason as mentioned above, when opening the cover 12 to the left side, it is desired to install the rotary shaft at the right side of the control and display part. When opening the cover 12 to the right side, it is preferable to install the rotary shaft at the left side of the control and display part.

With the above described analyzer of the invention, it is possible to manipulate the operating keys and to observe the display screen while adjusting and servicing with the front cover opened. This brings about the effect of enhancing working efficiency.

## Claims

1. An analyzer comprising:
a main body (10);
a front cover (12) pivotably connected to the main body (10) so as to be pivotable around a first axis of rotational movement from a closed position to an open position; and
a control and/or display part (20) connected to the front cover (12) and having operation keys (24) which may be used and/or a display (22) which may be viewed, when the front cover is in its closed position;
characterized in that:
the control and/or display part (20) is pivotably connected to the front cover (12) so as to be pivotable around a second axis of rotational movement so that the operation keys (24) may be used and/or the display (22) may be viewed, when the front cover is in its open position; and
the second axis is substantially parallel to the first axis.

2. An analyzer according to claim 1, wherein the control and/or display part (20) is pivotably connected to the front cover (12) by a shaft (28) disposed adjacent to an edge of the control and/or display part (20).

3. An analyzer according to claim 1 or 2, wherein, when the front cover (12) is in its closed position, the control and/or display part (20) is inside the front cover and the operation keys (24) may be used and/or the display (22) may be viewed through an opening (26) in the front cover (12).

## Patentansprüche

1. Analysenvorrichtung mit
einem Hauptkörper (10),
einer Frontabdeckung (12), die mit dem Hauptkörper (10) derart schwenkbar verbunden ist, daß sie um eine erste Drehbewegungsachse aus einer geschlossenen Stellung in eine offene Stellung schwenkbar ist, und
einem Kontroll- und/oder Sichtanzeigeteil (20), das mit der Frontabdeckung (12) verbunden ist und Betriebstasten (24), die verwendet werden können, und/oder eine Sichtanzeige (22), die betrachtet werden kann, wenn sich die Frontabdeckung in ihrer geschlossenen Stellung befindet, hat,
dadurch gekennzeichnet, daß
das Kontroll- und/oder Sichtanzeigeteil (20) derart schwenkbar mit der Frontabdeckung (12) verbunden ist, daß es um eine zweite Drehbewegungsachse schwenkbar ist, so daß die Betriebstasten (24) verwendet werden können und/oder die Sichtanzeige (22) betrachtet werden kann, wenn sich die Frontabdeckung in offener Stellung befindet und
die zweite Achse im wesentlichen parallel zu der ersten Achse ist.

2. Analysenvorrichtung nach Anspruch 1, bei der das Kontroll- und/oder Sichtanzeigeteil (20) durch eine Welle (28), die nahe einer Kante des Kontroll- und/oder Sichtanzeigeteils (20) angeordnet ist, schwenkbar mit der Frontabdeckung (12) verbunden ist.

3. Analysenvorrichtung nach Anspruch 1 oder 2, bei der das Kontroli- und/oder Sichtanzeigeteil (20), wenn sich die Frontabdeckung (12) in ihrer geschlossenen Stellung befindet, innerhalb der Frontabdeckung ist und durch eine Öffnung (26) in der Frontabdeckung (12) die Betriebstasten (24) verwendet werden können und/oder die Sichtanzeige (22) betrachtet werden kann.

## Revendications

1. Appareil d'analyse comprenant :
un corps principal (10) ;
un couvercle avant (12) relié de manière à pivoter au corps principal (10) afin d'être amené à pivoter autour d'un premier axe de rotation d'une position fermée à une position ouverte ; et
une partie de commande et/ou d'affichage (20) reliée au couvercle avant (12) et comportant des touches de fonction (24) qui peuvent être utilisées et/ou un affichage (22) qui est visible, lorsque le couvercle avant (12) est dans sa position fermée ;
caractérisé en ce que :
la partie de commande et/ou d'affichage (20) est reliée de manière à pivoter au couvercle avant (12) afin d'être amenée à pivoter autour d'un second axe de rotation de manière que les touches de fonction (24) puissent être utilisées et/ou l'affichage (22) soit visible, lorsque le couvercle avant est dans sa position ouverte ; et
le second axe est sensiblement parallèle au premier axe.

2. Appareil d'analyse selon la revendication 1, dans lequel la partie de commande et/ou d'affichage (20) est reliée de manière à pivoter au couvercle avant (12) par un arbre (28) adjacent à un bord de la partie de commande et/ou d'affichage (20).

3. Appareil d'analyse selon la revendication 1 ou 2, dans lequel, lorsque le couvercle avant (12) est dans sa position fermée, la partie de commande et/ou d'affichage (20) est située à l'intérieur du couvercle avant et les touches de fonction (24) peuvent être utilisées et/ou l'affichage (22) est visible à travers une ouverture (26) dans le couvercle avant (12).
